# EUROPÄISCHE PATENTSCHRIFT

(11) **EP 1 902 985 B1**
(45) Veröffentlichungstag und Bekanntmachung des Hinweises auf die Patenterteilung: **20.05.2009**
(21) Anmeldenummer: 07017448.7
(22) Anmeldetag: 06.09.2007
(51) Int. Cl.: B65G 67/48

(54) **Seitenhochkipper zum Entleeren von Waggons**
Lateral high-tip skip for emptying wagons
Culbuteur en hauteur latéral destiné à vider des wagons

(30) Priorität: 23.09.2006 DE 102006044977
(43) Veröffentlichungstag der Anmeldung: 26.03.2008
(73) Patentinhaber: ThyssenKrupp Fördertechnik GmbH, 45143 Essen (DE)
(72) Erfinder: Nuengsri, Suthat, 66386 St. Ingbert (DE)
(74) Vertreter: Dahlkamp, Heinrich-Leo

(56) Entgegenhaltungen:
- FR-A- 2 470 745
- US-A- 4 134 503
- US-A- 4 690 603
- US-A- 5 509 723

## Beschreibung

Die Erfindung bezieht sich auf einen Seitenhochkipper zum Entleeren von Materialen, vorzugsweise Schüttgut aus oben offenen Waggons gemäß Oberbegriff des Anspruches 1.

Aus der US-A-4,134,503 ist eine Vorrichtung zum Entladen von oben offenen Fahrzeugen, insbesondere Eisenbahnwaggons ersichtlich, wobei der mit Material gefüllte Waggon in eine U-förmige oben offene Aufnahmevorrichtung gefahren wird, die zum Entleeren in den seitlich daneben angeordneten Bunker in zwei Stufen mit Hilfe von jeweils vier Hydraulikzylindern angehoben und geschwenkt wird. Die Vorrichtung ist dabei so ausgebildet, dass die gesamte Einrichtung bis weit über den oberen Schwenkpunkt angehoben werden muss. Dazu wird in einem ersten Schritt mit einem Hydraulikzylinder ein am Fundament befestigtes Zwischenstück, an dem die Kippvorrichtung befestigt ist, soweit angehoben, bis der Waggon in einer oberen nahezu um 90° geschwenkten Position angekommen ist. Anschließend wird mit einem am Zwischenstück angeordneten zweiten Zylinder die Kippvorrichtung bis in die Endstellung geschwenkt. Bei dieser zum Stand der Technik gehörigen Kippvorrichtung muss die gesamte Vorrichtung mit dem darin befindlichen gefüllten Waggon in aufwändiger Weise sehr hoch gehoben werden, um über den oberen Schwenkpunkt zu kommen. Außerdem ist zur Vermeidung von Torsionskräften an dem relativ stabil ausgeführten Zwischenstück eine hohe Anzahl von Zylindern angebracht. Insbesondere ist aber durch die U-förmige Aufnahmevorrichtung die seitliche Zugänglichkeit zum Waggon und dessen Längsantrieb mittels z.B. eines Seitenarmvorziehers zum Einbringen des Waggons in die Vorrichtung verwehrt. Außerdem ist der U-Rahmen unnötig schwer und verlangt dadurch unnötig hohe Schwenkkräfte, -momente und -leistung.

In der FR 2470 745 A1 ist eine ähnliche Vorrichtung beschrieben, bei der der Kipprahmen und das Zwischenstück zweistufig mit Hilfe von Zylindern hydraulisch um ein und dieselbe waagerechte Achse geschwenkt wird und das Zwischenstück zwei zueinander nicht bewegliche Arme besitzt, an deren Enden jeweils einer der beiden Zylinder angreift. Auch hierbei muss der gesamte Kipprahmen über die hochgelegene Drehachse gehoben werden.

Der Erfindung liegt die Aufgabe zu Grunde, eine Vorrichtung vorzugschlagen, bei der die zum Stand der Technik gehörigen Probleme nicht bestehen und eine einfachere kostengünstige Konstruktion des Seitenhochkippers erreicht wird.

Die Lösung dieser Aufgabe ist in Anspruch 1 wiedergegeben. Die Unteransprüche 2 bis 11 enthalten sinnvolle ergänzende Ausführungsformen dazu.

Bei dem erfindungsgemäßen Seitenhochkipper ist das Zwischenstück jeweils als einfache Wippe mit einem oberen und einem unteren Arm ausgebildet, die etwa mittig, d.h. etwa auf ⅓ ^{÷ 2}/₃ ihrer Länge, mit einer ersten Schwenkachse am Fundament gelagert ist. Am freien Ende des unteren Armes der Wippe greift das Gelenk eines ersten Zylinders an, der auf dem Boden am Fundament gelenkig abgestützt ist und für den Schwenkvorgang der Wippe um die erste Schwenkachse sorgt. Am freien Ende des oberen Armes der Wippe ist das den Waggonrädern abgewandte Ende des Kipprahmens mit der zweiten waagerechten Schwenkachse gelagert. Am unteren Arm der Wippe ist außerdem zwischen dem Gelenk des ersten Zylinders und der ersten Schwenkachse in Schwenkrichtung vorne bzw. an der dem Kipprahmen zugewandten Seite der zweite Zylinder gelenkig gelagert, der für den Schwenkvorgang des Kipprahmens gegenüber der Wippe um die zweite, obere Schwenkachse sorgt.

Im Gegensatz zu dem aus der US-A-4,134,503 als Stand der Technik ersichtlichen Zwischenstück, das aus mehreren seitlich versetzten Querträgern und einem stabilen, die Querträger verbindenden Längsträger besteht, sind erfindungsgemäß vorzugsweise nur zwei Wippen für den gesamten Seitenhochkipper vorgesehen, die ohne eine Verbindung über einen eigenen Längsträger in entsprechendem Abstand zueinander am Fundament gelagert sind.

Die Wippen können insbesondere U-förmig, C-förmig oder halbkreisförmig zum Kipprahmen hin offen ausgebildet sein, wobei die beiden Zylinder im Wesentlichen in einer Ebene am unteren Arm der Schwinge angreifen und der Kipprahmen am von den Waggonrädern abgewandten Ende gelagert ist. Durch diese Anordnung in einer Ebene werden die Torsionskräfte um die Längsachse der Wippe minimiert bzw. ausgeschlossen, sodass man im Gegensatz zum Stand der Technik jeweils mit einem Zylinder pro Wippe und pro Schwenkvorgang auskommt.

Von besonderer Bedeutung ist auch, dass in der Ausgangsstellung der Schwerpunkt des Waggons noch erheblich unterhalb der ersten Schwenkachse der Wippe liegt. Dadurch, dass die Wippe bei der Betätigung durch den ersten Zylinder um die etwa mittig angeordnete waagerechte Schwenkachse schwenkt, wird spätestens mit dem ersten Anheben der Waggon auch automatisch gekippt und mit seinem Schwerpunkt in horizontaler Richtung wesentlich auf die erste Schwenkachse zubewegt. Das gilt auch für die zweite am oberen Ende der Wippe angeordnete Schwenkachse, die nach der ersten Schwenkbewegung etwa oberhalb der ersten Schwenkachse angeordnet ist. Dadurch ist für die zweite Schwenkbewegung mit Hilfe des zweiten Zylinders nur eine relativ geringe Kraft aufzubringen.

Der erfindungsgemäße Seitenhochkipper besitzt gemäß Kennzeichen des Anpruches 6 zwei C-förmig ausgebildete Kipprahmen mit jeweils mindestens einem sich quer bis unter die Plattform erstreckenden unteren Schenkel und mindestens einem an der dem Bunker zugewandten Seite des Waggons sich erstreckenden Seitenschenkel sowie mindestens einem die Kipprahmen verbindenden sich in Waggonlängsrichtung erstreckenden Längsträger. Das besondere an diesem C-förmigen Kipprahmen ist, dass die dem Bunker abgewandte Seite des Waggons vollständig frei bleibt und z.B. ein ausreichender Bewegungs- und Angreifraum für den Seitenarmvorzieher zum Ein- und Ausschieben des Waggons verbleibt.

Die Plattform, auf die der Waggon gefahren wird, kann insbesondere mit einer waagerechten Schwenkachse auf dem Kipprahmen gelagert sein, wobei vorzugsweise die Schwenkachse gegenüber dem Schwerpunkt des Waggons versetzt angeordnet ist. Durch diese insbesondere versetzt angeordnete Schwenkachse wird erreicht, dass spätestens beim Beginn des ersten Schwenkvorganges der Waggon seitlich kippt und an mindestens einem Anschlag am Kipprahmen zur Anlage kommt und dort während des gesamten weiteren Schwenk- und Entladevorganges anliegt. Bei der Vorrichtung gemäß US-A-4,134,503 ist der Waggon auf einer Plattform angeordnet, die mit Hilfe einer eigenen Antriebsvorrichtung in Waggonquerrichtung verschoben wird. Bei der erfindungsgemäßen Kippvorrichtung kann auf diese zusätzliche Antriebsvorrichtung zum seitlichen Verschieben verzichtet werden.

Zur Fixierung des Waggons in dem Kipprahmen ist weiterhin vorgesehen, dass am Kipprahmen befestigte Haltevorrichtungen während des ersten Schwenkvorganges auf die Oberkanten der dem Bunker zu- bzw. abgewandten Seitenwand des Waggons abgesenkt werden, kurz nachdem der Waggon seitlich gekippt und an dem Anschlag am Kipprahmen zur Anlage gekommen ist. Es hat sich ebenfalls als vorteilhaft erwiesen, bereits beim zweiten Schwenkvorgang die Klemmkraft der Haltevorrichtungen etwa um das Eigengewicht des Waggons zu entlasten. Dadurch wird die Haltekraft für die Haltevorrichtung wesentlich verringert.

Es hat sich als günstig erwiesen, je eine Haltevorrichtung für den Waggon auf beiden Längsseiten des Waggons anzuordnen. Jede Haltevorrichtung erstreckt sich mit einem Längsbalken über die gesamte Länge der Seitenwand des Waggons. Für den freien Materialfluß sind die beiden Querbalken einer Haltevorrichtung außerhalb der Waggonstirnwände angeordnet.

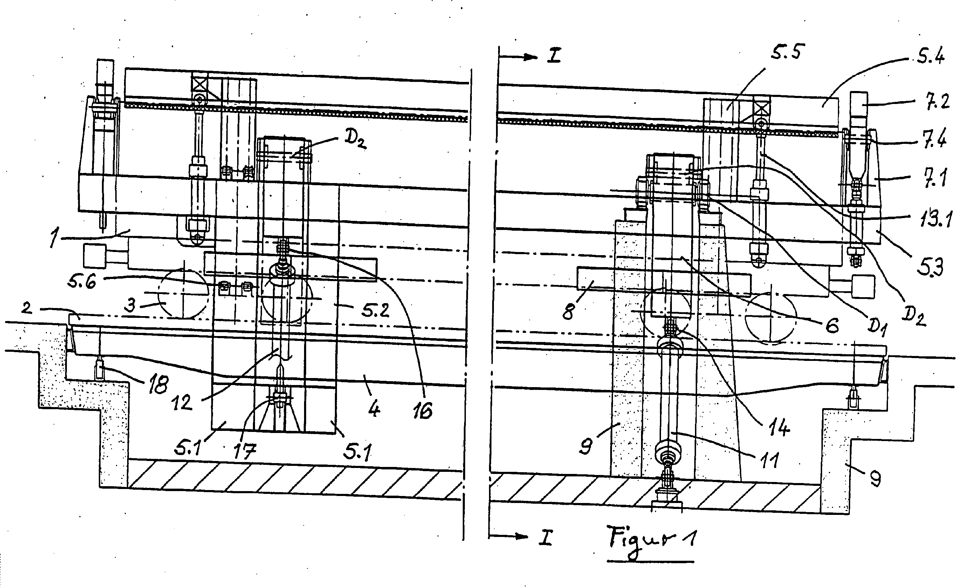

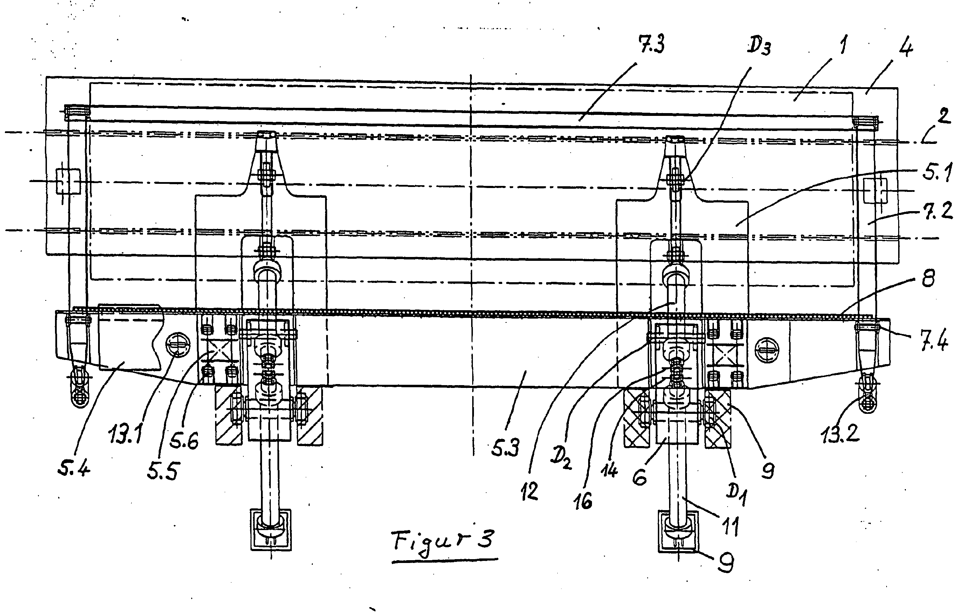

Die Erfindung wird anhand der beigefügten Figuren 1 bis 5 beispielsweise näher erläutert. Es zeigen
- Fig. 1: eine Seitenansicht A zu Fig. 2 des erfindungsgemäßen Seitenhochkippers,
- Fig. 2: einen Querschnitt zu Fig. 1 nach der Linie |-| von Fig. 1 mit dem in den Seitenhochkipper eingefahrenen Waggon 1 vor dem ersten Schwenkvorgang,
- Fig. 3: eine Draufsicht zu Fig. 2,
- Fig. 4: einen Querschnitt entsprechend Fig. 2 nach dem ersten Schwenkvorgang und
- Fig. 5: einen Querschnitt entsprechend den Fig. 2 und 3 in der Endstellung nach zusätzlicher Betätigung des Zylinders 12.

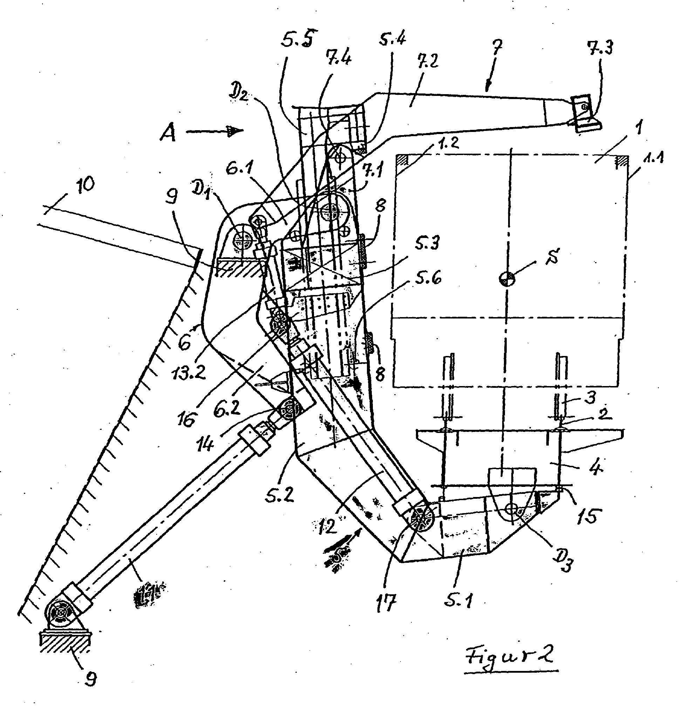

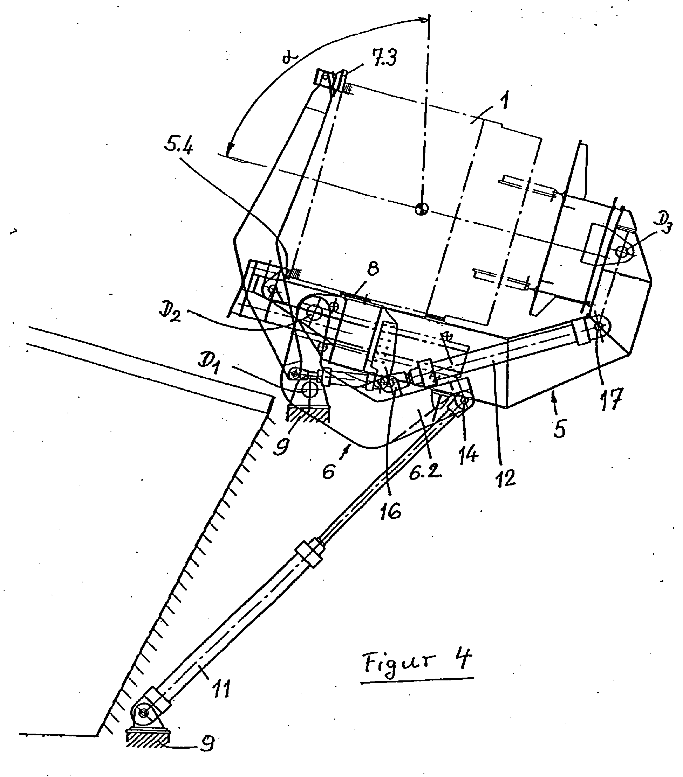

In den Figuren ist der Waggon 1 jeweils mit seinen Außenkonturen und den Rädern 3 auf den Schienen 2 auf der Plattform 4 dargestellt. Nach dem Einfahren des Waggons 1 mit Hilfe eines nicht dargestellten Seitenarmvorziehers liegt die Plattform 4 jeweils an ihren Enden auf den Punkten 18 auf dem Fundament 9 auf. Die Plattform 4 ist mit der waagerechten Schwenkachse D3 auf dem unteren Schenkel 5.1 des Kipprahmens 5 schwenkbar gelagert, sodass der Waggon 1 während des Anhebens und Schwenkens, wie aus den Figuren 2 und 4 ersichtlich ist, geringfügig seitlich abkippt und an den Anschlägen 8 zur Anlage kommt.

Der Kipprahmen 5 ist C-förmig ausgebildet und besitzt neben dem unteren Schenkel 5.1 einen seitlichen Schenkel 5.2. Die beiden in Waggonquerrichtung sich erstreckenden C-Rahmen sind über mindestens einen Längsrahmen 5.3 fest miteinander verbunden. Der Kipprahmen 5 ist über die Schwenkachse D2 gelenkig mit dem als Wippe ausgeführten Zwischenstück 6 verbunden, das wiederum über die waagerechte Schwenkachse D1 gelenkig am Fundament 9 gelagert ist. Das Zwischenstück 6 ist im Wesentlichen U-förmig, C-förmig oder halbkreisförmig ausgebildet und besitzt etwa im mittleren Bereich die waagerechte am Fundament 9 gelagerte Schwenkachse D1 und einen oberen Arm 6.1 sowie einen unteren Arm 6.2. Am freien Ende des unteren Armes 6.2 greift am Gelenk 14 der erste Zylinder 11 für die erste Schwenkbewegung an. Am oberen freien Ende des oberen Armes 6.1 ist das obere Ende des Kipprahmens 5 mit der Schwenkachse D2 befestigt.

Während der Betätigung des ersten Zylinders 11 und des damit verbundenen ersten Schwenk- und Hebevorganges kippt der Waggon 1 um die Schwenkachse D3 nach links, bis er an den Anschlägen 8 zur Anlage kommt. Dann wird der Haltebalken 7.3 der Haltevorrichtung 7 mit Hilfe der Zylinder 13.2 auf die Oberkante der dem Bunker 10 abgewandten Seitenwand 1.1 des Waggons abgesenkt. Diese Haltevorrichtung 7 besteht aus den 2 Zylindern 13.2, den Lagerböcken 7.1, zwei Querbalken 7.2 und einem Haltebalken 7.3 am Ende der Querbalken 7.2. Außerdem wird gleichzeitig mit dem Absenken des Haltebalkens 7.3 auch der Haltebalken 5.4 der zwischen den Führungsrollen 5.6 geführten teleskopierbaren Haltevorrichtung 5.5 mit Hilfe der beiden Teleskopierzylinder 13.1 auf die Oberkante der dem Bunker 10 zugewandten Seitenwand 1.2 des Waggon abgesenkt.

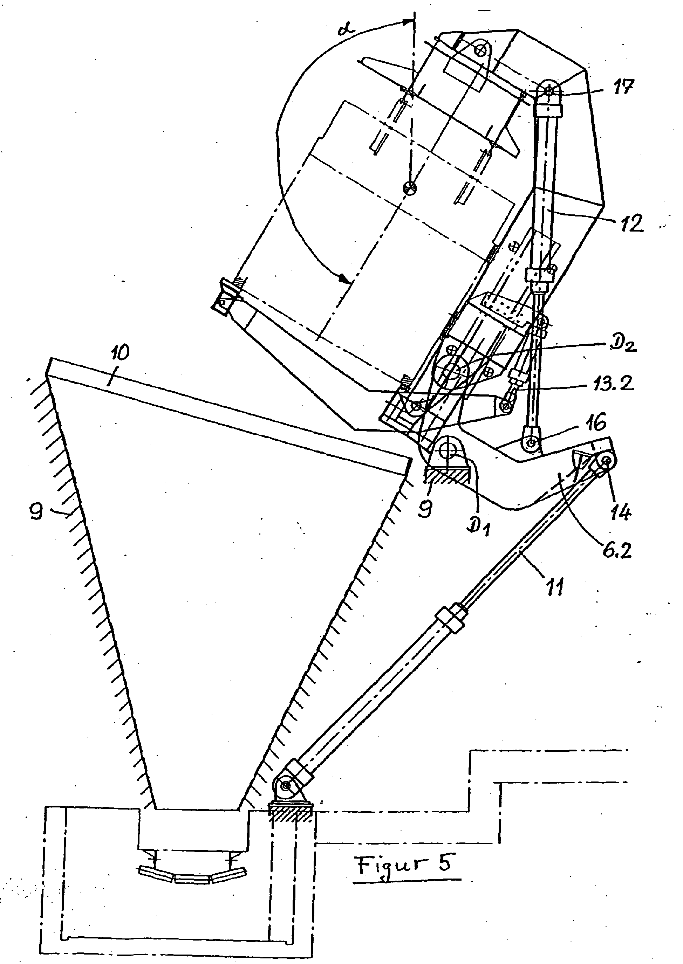

Sobald der erste Zylinder 11 seine Endposition erreicht hat, wird der auf der dem Kipprahmen 5 zugewandten Seite gelenkig am unteren Arm 6.2 befestigte zweite Zylinder 12 betätigt. Er greift an den Gelenken 16 und 17 an und bewegt den Kipprahmen 5 und den Waggon 1 um die Schwenkachse D2 bis in die in Fig. 5 dargestellte Endstellung. Der Neigungswinkel α des Waggons 1 mit dem Schwerpunkt S gegenüber der Senkrechten beträgt nach der ersten Schwenkung ca. 70° (vgl. Fig. 4) und in der Endstellung mindestens 145° (vgl. Fig. 5).

### Bezugszeichenliste:

- 1: Waggon
- 1.1: äußere Seitenwand von 1
- 1.2: innere Seitenwand von 1
- 2: Schienen auf 4
- 3: Räder von 1
- 4: Plattform
- 5: Kipprahmen
- 5.1: unterer Schenkel von 5
- 5.2: seitlicher Schenkel von 5
- 5.3: Längsträger von 5
- 5.4: Haltebalken an 5.5 für 1.2
- 5.5: Teleskopierbare Haltevorrichtung an 5 für 5.4
- 5.6: Führungsrollen für 5.5
- 6: Zwischenstück (als Wippe ausgebildet)
- 6.1: Oberer Arm von 6
- 6.2: Unterer Arm von 6
- 7: Haltevorrichtung für 1.1 an 5
- 7.1: Lagerbock an 5.3 für 7
- 7.2: Querbalken von 7
- 7.3: Haltebalken an 7 für 1.1
- 7.4: Lagerung von 7.2 an 7.1
- 8: Anschlag an 5 für 1
- 9: Fundament
- 10: Bunker
- 11: erster Zylinder für 6 an 9
- 12: zweiter Zylinder für 5 an 6
- 13.1: Teleskopierrylinder für 5.5 an 5.2/5.3
- 13.2: Zylinder zwischen 7.2 und 5 zum Kippen von 7.2
- 14: Gelenk von 11 an 6.2
- 15: Auflage für 4 auf 5
- 16: Gelenk von 12 an 6.2
- 17: Gelenk von 12 an 5
- 18: Auflagen von 4 auf 9

- D1: erste Schwenkachse für 6 an 9
- D2: zweite Schwenkachse für 5 an 6
- D3: Schwenkachse für 4 an 5

- α: Neigungswinkel von 1
- S: Schwerpunkt von 1

## Patentansprüche

1. Seitenhochkipper zum Entleeren von Materialien, vorzugsweise Schüttgut, aus oben offenen Waggons (1) mit einer von den Waggons (1) zu befahrenden Plattform (4), die auf einem unteren Schenkel (5.1) eines Kipprahmens (5) gelagert ist, wobei der Kipprahmen (5) mit der Plattform (4) und dem Waggon (1) mindestens zweistufig mit Hilfe von Zylindern (11, 12) hydraulisch um waagerechte Schwenkachsen (D1, D2) zur Entleerung des Waggons (1) in einen neben dem Seitenhochkipper angeordneten Bunker (10) angehoben und geschwenkt werden kann, der Kipprahmen (5) über mindestens ein Zwischenstück (6) mit einer Schwenkachse (D1) schwenkbeweglich am Fundament (9) befestigt ist, das Zwischenstück (6) über einen am Fundament (9) gelenkig gelagerten ersten Zylinder (11) schwenkbar ist, der Kipprahmen (5) über eine Schwenkachse (D2) schwenkbeweglich am Zwischenstück (6) gelagert ist und über einen mit dem Gelenk (16) am Zwischenstück (6) sowie mit dem Gelenk (17) am Kipprahmen (5) gelagerten zweiten Zylinder (12) schwenkbar ist, **dadurch gekennzeichnet daß** das Zwischenstück (6) als Wippe mit einem oberen Arm (6.1) und einem unteren Arm (6.2) ausgebildet und etwa mittig mit einer ersten Schwenkachse (D1) am Fundament (9) gelagert ist, am freien Ende des unteren Armes (6.2) der Wippe das Gelenk (14) des ersten Zylinders (11) angreift, am freien Ende des oberen Armes (6.1) der Wippe der Bereich des den Waggonrädern (3) abgewandten, oberen Endes des Kipprahmens (5) mit der zweiten Schwenkachse (D2) gelagert ist und am unteren Arm (6.2) der Wippe zwischen dem Gelenk (14) und der ersten Schwenkachse (D1) der zweite Zylinder (12) mit dem Gelenk (16) gelagert ist, der zur Schwenkung des Kipprahmens (5) um die zweite Schwenkachse (D2) an dessen Gelenk (17) angreift.

2. Seitenhochkipper nach Anspruch 1, **dadurch gekennzeichnet, dass** die Wippe U-förmig, C-förmig und/oder halbkreisförmig, zum Kipprahmen (5) hin offen, ausgebildet ist.

3. Seitenhochkipper nach Anspruch 1, **dadurch gekennzeichnet, dass** in der Ausgangsstellung der Schwerpunkt (S) des Waggons (1) unterhalb der Schwenkachse (D1) liegt.

4. Seitenhochkipper nach Anspruch 1, **dadurch gekennzeichnet, dass** die beiden Zylinder (11, 12) die Kipprahmen (5) in einer Ebene am unteren Arm (6.2) der Schwinge angreifen.

5. Seitenhochkipper nach Anspruch 1, **dadurch gekennzeichnet, dass** der erste Zylinder (11) in Schwenkrichtung hinten und der zweite Zylinder (12) in Schwenkrichtung vorne an der Wippe angelenkt ist.

6. Seitenhochkipper nach Anspruch 1, **dadurch gekennzeichnet, dass** zwei C-förmig ausgebildete Kipprahmen (5) mit jeweils mindestens einem sich quer bis unter die Plattform (4) erstreckenden unteren Schenkel (5.1) mit mindestens einem an der dem Bunker (10) zugewandten Seite des Waggons (1) sich erstreckenden Seitenschenkel (5.2) und mindestens ein die Kipprahmen (5) verbindender Längsträger (5.3) vorgesehen sind.

7. Seitenhochkipper nach Anspruch 1, **dadurch gekennzeichnet, dass** die Plattform (4) um eine waagerechte, in Waggonlängsrichtung sich erstreckende Schwenkachse (D3) gegenüber dem unterern Schenkel (5.1) schwenkbeweglich ist.

8. Seitenhochkipper nach Anspruch 1, **dadurch gekennzeichnet, dass** der Schwerpunkt (S) des Waggons (1) gegenüber der Schwenkachse (D3) zum Seitenschenkel (5.2) des Kipprahmens (5) hin versetzt ist.

9. Seitenhochkipper nach Anspruch 1, **dadurch gekennzeichnet, dass** sowohl auf der dem Bunker (10) zu- als auch auf der ihm abgewandten Seitenwand des Waggons (1) jeweils eine auf die Oberkante der jeweiligen Seitenwand (1.1, 1.2) absenkbare Haltevorrichtung (5.5, 7) angeordnet ist.

10. Seitenhochkipper nach Anspruch 9, **dadurch gekennzeichnet, dass** die Haltevorrichtungen (5.5, 7) jeweils einen Haltebalken (5.4, 7.3) beinhalten, welcher sich über zumindest den größten Teil der Waggonlänge erstreckt und sich von oben auf die jeweilige Waggonseitenwand (1.1, 1.2) absenken lässt.

11. Seitenhochkipper nach Anspruch 10, **dadurch gekennzeichnet, dass** die Haltevorrichtung (5.5) teleskopierbar zwischen Führungselementen oder Rollen (5.6) angeordnet und mittels eines Teleskopierzylinders (13.1) in Höhenrichtung des Waggons (1) bewegt und verspannt werden kann.

12. Seitenhochkipper nach Anspruch 10, **dadurch gekennzeichnet, dass** die Haltevorrichtung (7) in einer Lagerung (7.4) kippbar gelagert ist und mittels eines Zylinders (13.2) bewegt und verspannt werden kann.

## Claims

1. A lateral high-tip skip for unloading of materials, preferably bulk material, from open-top wagons (1), comprised of a platform (4) to be accessed by wagons (1), said platform being supported on a lower leg (5.1) of a tilting frame (5), with it being possible to lift and swivel said tilting frame (5) with the platform (4) and the wagon (1) at least in two stages by the aid of cylinders (11, 12) hydraulically about horizontal swivelling axes (D1, D2) for emptying of said wagon (1) into a bin (10) arranged next to the lateral high-tip skip, and wherein said tilting frame (5) is fastened via at least one intermediate piece (6) with a swivelling axis (D1) in a swivelling arrangement at the foundation (9), said intermediate piece (6) being swivable via a first cylinder (11) supported in articulated arrangement at said foundation (9), said tilting frame (5) being supported via a swivelling axis (D2) in swivelling arrangement at said intermediate piece (6) and being swivable via a second cylinder (12) supported via an articulation (16) at the intermediate piece (6) as well as an articulation (17) at the tilting frame (5), **characterized in that** the intermediate piece (6) is configured as a rocker with an upper arm (6.1) and a lower arm (6.2) and supported roughly centrally with a first swivelling axis (D1) at the foundation (9), and **in that** the articulation (14) of the first cylinder (11) attacks at the free end of the lower arm (6.2) of the rocker, and **in that** the area of the upper end of said tilting frame (5) with the second swivelling axis (D2) averted from the wagon wheels (3) is supported at the free end of the upper arm (6.1) of the rocker, and **in that** the second cylinder (12) with the articulation (16) is supported at the lower arm (6.2) of the rocker between the articulation (14) and the first swivelling axis (D1), said second cylinder attacking at the articulation (17) to swivel the tilting frame (5) about the second swivelling axis (D2).

2. A lateral high-tip skip as defined in claim 1, **characterized in that** the rocker is of a U-shaped, C-shaped or semi-circle shaped configuration being open towards the tilting frame (5).

3. A lateral high-tip skip as defined in claim 1, **characterized in that** the center of gravity (S) of said wagon (1) whilst being in its home position lies below the swivelling axis (D1).

4. A lateral high-tip skip as defined in claim 1, **characterized in that** the two cylinders (11, 12) attack the tilting frames (5) in one plane at the lower arm (6.2) of the rocker.

5. A lateral high-tip skip as defined in claim 1, **characterized in that** the first cylinder (11) is articulated at the rear side of the rocker viewed in the direction of swivelling and that the second cylinder (12) is articulated at the front side of the rocker in the direction of swivelling.

6. A lateral high-tip skip as defined in claim 1, **characterized in that** the two C-shaped tilting frames (5) each comprised of at least one lower leg (5.1) extending diagonally to under the platform (4) are provided with at least one lateral leg (5.2) extending at the wagon (1) side facing the bin (10) and at least one longitudinal beam (5.3) connecting said tilting frames (5).

7. A lateral high-tip skip as defined in claim 1, **characterized in that** the platform (4) can be swivelled versus the lower leg (5.1) about a horizontal swivelling axis (D3) extending in the longitudinal direction of the wagon

8. A lateral high-tip skip as defined in claim 1, **characterized in that** the center of gravity (S) of said wagon (1) versus the swivelling axis (D3) is staggered towards the lateral leg (5.2) of said tilting frame (5).

9. A lateral high-tip skip as defined in claim 1, **characterized in that** one holding device (5.5, 7) each which can be lowered onto the top edge of the relevant side wall (1.1, 1.2) is arranged both on the side of wagon (1) facing the bin (10) and averted from the bin (10).

10. A lateral high-tip skip as defined in claim 9, **characterized in that** the holding devices (5.5, 7) each are comprised of a holding beam (5.4, 7.3) which extends at least over the largest part of the wagon length and which can be lowered from the top down onto the relevant wagon side wall (1.1, 1.2).

11. A lateral high-tip skip as defined in claim 10, **characterized in that** the holding device (5.5) is arranged in a telescopic configuration between the guiding elements or rollers (5.6) and can be moved and tensioned by means of a telescoping cylinder (13.1) in the height direction of said wagon (1).

12. A lateral high-tip skip as defined in claim 10, **characterized in that** the holding device (7) is supported in a bearing support (7.4) in a tilting arrangement and can be moved and tensioned by means of a cylinder (13.2).

## Revendications

1. Culbuteur en hauteur latéral destiné à l'évacuation de matériaux, de préférence de matériaux en vrac, depuis des wagons (1) ouverts en haut au moyen d'une plateforme (4) sur laquelle peuvent passer les wagons (1) et qui est montée sur une aile inférieure (5.1) d'un bâti de bascule (5), ledit bâti de bascule (5) pouvant être soulevé et basculé hydrauliquement avec la plateforme (4) et le wagon (1) au moins à deux étages à l'aide de vérins (11,12) autour d'axes d'articulation horizontaux (D1, D2) pour vider le wagon (1) dans une trémie (10) située auprès du culbuteur en hauteur latéral, le bâti de bascule (5) étant fixé à basculement à la fondation (9) via au moins une partie intermédiaire (6) avec un axe d'articulation (D1), ladite partie intermédiaire (6) étant quant à elle montée pivotante via un premier vérin (11) articulé dans la fondation (9), le bâti de bascule (5) étant monté à basculement sur la partie intermédiaire (6) via un axe d'articulation (D2) et étant pivotable au moyen d'un deuxième vérin (12) fixé à la partie intermédiaire (6) au moyen de l'articulation (16) ainsi qu'au bâti de bascule (5) au moyen de l'articulation (17), **caractérisé en ce que** la partie intermédiaire (6) a la forme d'une bascule avec un bras supérieur (6.1) et un bras inférieur (6.2) et qu'elle est montée dans la fondation (9) approximativement au centre avec un premier axe d'articulation (D1), que l'articulation (14) du premier vérin (11) attaque à l'extrémité libre du bras inférieur (6.2) de la bascule, que la partie de l'extrémité supérieure du bâti de bascule (5) opposée aux roues du wagon (3) est montée à l'extrémité libre du bras supérieur (6.1) de la bascule au moyen du deuxième axe d'articulation (D2) et que le deuxième vérin (12) est monté au moyen de l'articulation (16) sur le bras inférieur (6.2) de la bascule entre l'articulation (14) et le premier axe d'articulation (D1), ce deuxième vérin (17) attaquant à son articulation (17) pour pivoter le bâti de bascule (5) autour du deuxième axe d'articulation (D2).

2. Culbuteur en hauteur latéral selon la revendication 1, **caractérisé en ce que** la bascule a une forme en U, en C et/ou demi-circulaire et qu'elle est ouverte vers le bâti de bascule (5).

3. Culbuteur en hauteur latéral selon la revendication 1, **caractérisé en ce qu'**en position de départ, le point de gravité (S) du wagon (1) est situé au-dessous de l'axe d'articulation (D1).

4. Culbuteur en hauteur latéral selon la revendication 1, **caractérisé en ce que** les deux vérins (11, 12) attaquent les bâtis de bascule (5) dans un plan au niveau du bras inférieur (6.2) de la bielle.

5. Culbuteur en hauteur latéral selon la revendication 1, **caractérisé en ce que** le premier vérin (11) est articulé à la bascule à l'arrière dans le sens du basculement et le deuxième vérin (12) à l'avant dans le sens du basculement.

6. Culbuteur en hauteur latéral selon la revendication 1, **caractérisé en ce que** sont prévus deux bâtis de bascule (5) formés en forme de C, chacun des deux bâtis de bascule ayant au moins une aile inférieure (5.1) qui s'étend transversalement jusqu'au-dessous de la plateforme (4) et qui possède au moins une aile latérale (5.2) s'étendant sur la face du wagon (1) tournée vers la trémie (10) et au moins une poutre longitudinale (5.3) reliant les bâtis de bascule (5).

7. Culbuteur en hauteur latéral selon la revendication 1, **caractérisé en ce que** la plateforme (4) est pivotable par rapport à l'aile inférieure (5.1) autour d'un axe d'articulation (D3) horizontal s'étendant dans le sens longitudinal du wagon.

8. Culbuteur en hauteur latéral selon la revendication 1, **caractérisé en ce que** le point de gravité (S) du wagon (1) est décalé par rapport à l'axe d'articulation (D3) vers l'aile latérale (5.2) du bâti de bascule (5).

9. Culbuteur en hauteur latéral selon la revendication 1, **caractérisé en ce qu'**un dispositif de retenue (5.5, 7) est disposé aussi bien sur la face latérale du wagon (1) tournée vers la trémie (10) que sur celle opposée à la trémie (1) et que ledit dispositif de retenue est abaissable sur le bord supérieur de la face latérale (1.1, 1.2) respective.

10. Culbuteur en hauteur latéral selon la revendication 9, **caractérisé en ce que** les dispositifs de retenue (5.5, 7) possèdent chacun une barre de retenue (5.4, 7.3) qui s'étend sur au moins la plus grande partie de la longueur du wagon et qui peut être abaissée du haut sur la face latérale respective du wagon (1.1,1.2).

11. Culbuteur en hauteur latéral selon la revendication 10, **caractérisé en ce que** le dispositif de retenue (5.5) est monté télescopable entre les éléments de guidage ou les galets (5.6) et qu'il peut être déplacé et serré dans le sens de la hauteur du wagon (1) au moyen d'un vérin de télescopage (13.1).

12. Culbuteur en hauteur latéral selon la revendication 10, **caractérisé en ce que** le dispositif de retenue (7) est monté à basculement dans un logement (7.4) et qui peut être déplacé et serré au moyen d'un vérin (13.2).
